# EUROPÄISCHE PATENTSCHRIFT

(11) **EP 3 818 796 B1**
(45) Veröffentlichungstag und Bekanntmachung des Hinweises auf die Patenterteilung: **06.09.2023**
(21) Anmeldenummer: 20194792.6
(22) Anmeldetag: 07.09.2020
(51) Int. Cl.: A01B 59/00, B60D 1/06, B60D 1/58

(54) **VERSCHLEISSANZEIGE EINES KUGELKOPFS EINER ANHÄNGERKUPPLUNG**
WEAR INDICATOR FOR A BALL HEAD OF A TRAILER COUPLING
INDICATEUR D'USURE D'UNE TÊTE SPHÉRIQUE D'UN ATTELAGE DE REMORQUE

(30) Priorität: 08.11.2019 DE 102019130214
(43) Veröffentlichungstag der Anmeldung: 12.05.2021
(73) Patentinhaber: CLAAS Tractor S.A.S., 78141 Vélizy-Villacoublay Cedex (FR)
(72) Erfinder: Viel, Fabrice, 92130 Issy les Moulineaux (FR)
(74) Vertreter: CLAAS Gruppe

(56) Entgegenhaltungen:
- EP-A1- 0 176 825
- EP-A1- 2 650 148
- DE-A1-102019 106 223
- US-A- 3 679 234
- US-A- 3 858 907
- US-A1- 2018 001 722

## Beschreibung

Die vorliegende Erfindung betrifft einen Kugelkopf einer Anhängerkupplung eines landwirtschaftlichen Fahrzeugs, mit einer Anzeige für den Kugelkopfverschleiß gemäß dem Oberbegriff des Anspruchs 1.

Kugelkopfkupplungen werden standardmäßig zur Verbindung eines Anhängers mit einem landwirtschaftlichen Fahrzeug oder Fahrzeugen im Straßentransport verwendet. Zapfen oder genormte Kugeln mit im landwirtschaftlichen Bereich meistens 80 mm Durchmesser sind mittels einer Halterung am Zugfahrzeug angeordnet und dienen als Anhängevorrichtung. Die Deichsel des Anhängers weist als Gegenstück eine Kugelpfanne mit Verschluss auf. Im gekoppelten Zustand ist die Kugelpfanne drehbar auf dem Kugelkopf gelagert, wobei die Kugelpfanne gegen ein Abheben vom Kugelkopf gesichert ist. In diesem Zustand überträgt die Kupplung Zugkräfte und Druckkräfte zwischen dem Zugfahrzeug und dem Anhänger. Dies führt zu Verschleiß am Kugelkopf sowie an der Kugelpfanne, der insbesondere durch Reibung verursacht wird. Mit steigendem Verschleiß nimmt die Tragfähigkeit des Kugelkopfes ab und eine Sicherung gegen ein Abheben der Kugelpfanne vom Kugelkopf wird zunehmend schwieriger. Aus diesem Grund weisen Kugelkopfkupplungen häufig Anzeigen auf, die dem Bediener den Verschleißgrad signalisieren, um diesen rechtzeitig auf einen nicht zulässigen Verschleißgrad der Kugelkopfkupplung aufmerksam zu machen.

Eine Kugelkopf-Anhängerkupplung mit einer Anzeige für den Kugelkopfverschleiß ist aus der EP 0 695 654 B1 bekannt. Diese besitzt ein Kupplungsgehäuse mit einer im wesentlichen halbkugelförmigen Kalotte, die auf den Kugelkopf aufgesetzt wird. Zum Festspannen des Kugelkopfes ist eine Kupplungsschale vorgesehen, die drehbar über eine Achse im Kupplungsgehäuse gelagert ist und mittels einer Feder in Öffnungsstellung gedrückt wird. Die Kupplungsschale wird durch einen Kupplungsgriff mit einem Sperrteil betätigt und angepresst. Eine Verschleißanzeige signalisiert die gegenseitige Drehstellung zwischen dem Sperrteil und der Kupplungsschale und damit den zwischen diesen beiden Teilen und den am Kugelkopf auftretenden Verschleiß. Die EP 0 176 825 A1 offenbart einen gattungsgemäßen Kugelkopf einer Anhängerkupplung.

Nachteilig an einer derartigen Verschleißanzeige ist, dass ein eingekuppelter Zustand zwischen Kupplungsgehäuse und Kugelkopf vorliegen muss, um den Verschleiß der Bauteile an der Verschleißanzeige abzulesen. Weiterhin ist in dem angezeigten Verschleiß der Anzeige stets der Verschleiß der Kupplungsschale sowie der Kalotte enthalten, so dass eine ausschließliche Ermittlung des Verschleißes des Kugelkopfes nicht möglich ist. In der Regel wird der Kugelkopf mit verschiedenen Kupplungselementen verwendet, wobei ebenfalls nicht jedes Kupplungselement eine Verschleißanzeige aufweist. Ein einfaches Erkennen des Verschleißes des Kugelkopfes ist jedoch besonders Hilfreich, um eine unzulässige Verwendung des Kugelkopfs zu vermeiden.

Der Erfindung liegt die Aufgabe zugrunde, die Nachteile des Stands der Technik zu beheben und insbesondere eine Anzeige für einen Kugelkopf bereit zu stellen, der ein einfaches Erkennen des Verschleißzustands des Kugelkopfes ermöglicht.

Die genannten Probleme werden bei einem Kugelkopf nach dem Oberbegriff des Anspruchs 1 durch die Merkmale des kennzeichnenden Teils von Anspruch 1 gelöst.

Gemäß dem Anspruch 1 wird ein Kugelkopf einer Anhängerkupplung eines landwirtschaftlichen Fahrzeugs, umfassend eine Anzeige für den Kugelkopfverschleiß vorgeschlagen, wobei die Anzeige erfindungsgemäß einteilig mit dem Kugelkopf ausgebildet ist. Hieraus resultiert der besondere Vorteil, dass der Verschleißzustand ohne weitere Hilfsmittel direkt am Kugelkopf erkenntlich ist. Kosten für zusätzliche Messeinrichtungen und zeitlicher Aufwand für einen Messervorgang werden vermieden. Weiterhin ist der Verschleißzustand im entkuppelten Zustand jederzeit ersichtlich, so dass kritische Verschleißzustände unmittelbar von einem Bediener erkannt werden können.

Erfindungsgemäß ist die Anzeige als zumindest eine Vertiefung an einer Kugeloberfläche des Kugelkopfs ausgebildet. Eine derartige Ausgestaltung ermöglicht eine einfache einteilige Ausbildung der Anzeige mit dem Kugelkopf. Weiterhin ist das Anbringen einer Vertiefung mit geringem Kostenaufwand verbunden.

Vorteilhafterweise ist die Vertiefung im Wesentlichen als Nut an der Kugeloberfläche des Kugelkopfs ausgebildet. Eine als Nut ausgebildete längliche Vertiefung hat den Vorteil, dass diese sich über einen Bereich erstrecken kann, welcher besonders stark von dem Verschleiß betroffen ist.

Insbesondere kann der Kugelkopf einen maximalen Durchmesser und einen minimalen Durchmesser aufweisen, wobei der maximale Durchmesser dem Ausgangsdurchemesser des Kugelkopfs im Neuzustand entspricht und der minimale Durchmesser der minimal für den Gebrauch zulässige Durchmesser ist.

Eine vorteilhafte Weiterbildung sieht vor, dass zumindest eine Vertiefung von der Kugeloberfläche bis zu dem minimalen Durchmesser in den Kugelkopf hineinreicht, wobei die Vertiefung einen maximal zulässigen Verschleißzustand signalisiert. Dem Bediener ist somit ersichtlich, wann der maximal zulässige Verschleißzustand erreicht ist.

Vorteilhaft ist es, wenn zumindest eine Vertiefung von der Kugeloberfläche bis zu einem dritten Durchmesser in den Kugelkopf hineinreicht, wobei der dritte Durchmesser einen definierten Verschleißzustand signalisiert. Hierdurch können weitere Verschleißzustände dem Bediener erkenntlich gemacht werden. Weiterhin ist es möglich, dass die Kugeloberfläche an verschiedenen Bereichen unterschiedlich stark verschleißt, sodass der Abrieb zweier sich gegenüberliegender Bereiche, die zusammen einen gemeinsamen Durchmesser des Kugelkopfs aufweisen, unterschiedlich ausgeprägt ist. Dementsprechend kann bei einem einseitigen unterschreiten des minimal zulässigen Durchmessers an einem vom Verschleiß besonders betroffenen Bereich, der diesen gegenüberliegende Bereich lediglich geringfügige Verschleißerscheinungen aufweisen, so dass in der Gesamtheit die Kugeloberfläche den minimal zulässigen Durchmesser nicht unterschreitet. Mittels derartiger Vertiefungen, die bis zu einem dritten Durchmesser in den Kugelkopf hineinreichen, können unterschiedlich ausgeprägte Verschleißerscheinungen zweier sich gegenüberliegender Bereiche berücksichtigt werden und somit ein minimal zulässiger Verschleißzustand der Gesamtheit der Kugeloberfläche besonders gut gekennzeichnet werden.

In einer vorteilhaften Ausgestaltung ist die Vertiefung zumindest teilweise mit einem ersten Material befüllt, wobei das erste Material sich in seiner Farbe und/oder Struktur von der übrigen Kugeloberfläche unterscheidet. Das Befüllen der zumindest einen Vertiefung vermeidet ein Ansammeln von Schmutz in der Vertiefung. Auf Grund der farblichen Unterschiede zwischen den beiden Materialien, ist weiterhin für den Bediener ersichtlich, sobald der Verschleiß, insbesondere Abrieb, den Kugelkopf bis zu der Tiefe der zumindest einen Vertiefung abgenutzt hat.

Insbesondere ist die Verschleißfestigkeit des ersten Materials im Wesentlichen äquivalent zu einem zweiten Material, wobei der Kugelkopf im Wesentlichen aus dem zweiten Material, in der Regel Stahl, ausgebildet ist. Bei einer derartigen Ausgestaltung verschleißen die Materialen gleichmäßig, so dass scharfe Kanten an der Kugeloberfläche, die bei Reibung zwischen Kugelkopf und Kugelpfanne zu erhöhten Verschleiß führen können, vermieden werden.

Vorteilhafterweise ist zumindest eine Vertiefung an einen dem Zugfahrzeug zugewandten vorderen Bereich der Kugeloberfläche angeordnet, da auf Grund der Fahrdynamik, beispielsweise Brems- und Beschleunigungsvorgänge, dieser vordere Bereich besonders stark von Verschleiß betroffen ist und hier somit ein Erreichen des minimalen Verschleißzustands mit erhöhter Wahrscheinlichkeit auftritt.

Vorteilhafterweise ist zumindest eine Vertiefung an einen dem Zugfahrzeug abgewandten hinteren Bereich der Kugeloberfläche angeordnet, da auf Grund der Fahrdynamik, beispielsweise Brems- und Beschleunigungsvorgänge, dieser hintere Bereich ebenfalls besonders stark von Verschleiß betroffen ist und hier somit ein Erreichen des minimalen Verschleißzustands mit erhöhter Wahrscheinlichkeit auftritt.

Weitere vorteilhafte Ausgestaltungen sind Gegenstand weiterer Unteransprüche und werden nachfolgend an Hand eines in mehreren Figuren dargestellten Ausführungsbeispiels beschrieben. Es zeigen:
- Figur 1: zeigt schematisch eine 3D- und Seitenansicht einer Kugelkopfkupplung mit einem Kugelkopf und einer drehbar an diesem gelagerten Kugelpfanne;
- Figur 2: zeigt schematisch eine weitere Ausgestaltungsvariante eines Kugelkopfes einer Kugelkopfkupplung;

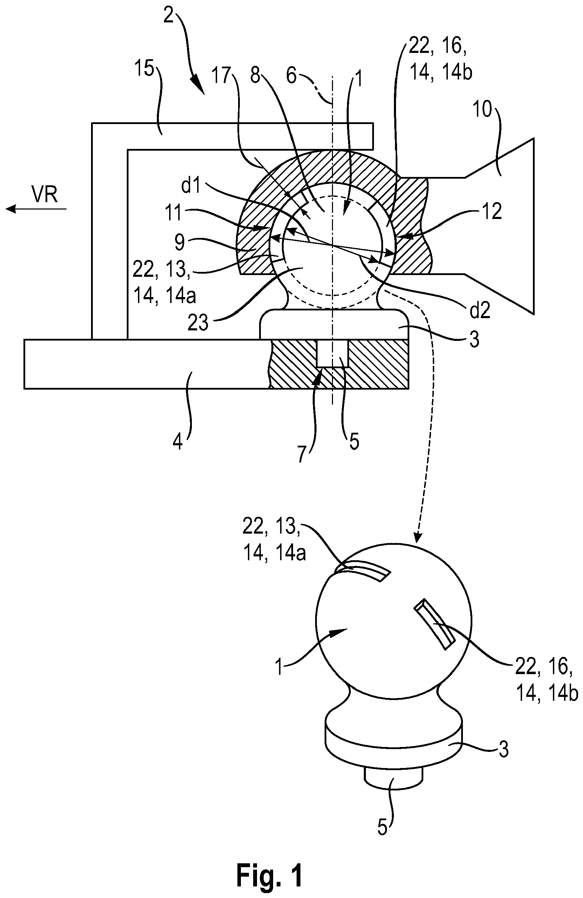

Fig. 1 zeigt einen erfindungsgemäßen Kugelkopf 1 einer Anhängerkupplung 2. Dieser ist im Wesentlichen kugelförmig ausgebildet und weist in einem unteren Bereich ein zylinderförmiges Kontaktelement 3 auf, mit welchem der Kugelkopf 1 untenseitig angeformt ist. In einer alternativen Ausführung können der Kugelkopf 1 und das Kontaktelement 3 zweiteilig ausgeführt und ortsfest miteinander verbunden sein, beispielsweise verschweißt. Das Kontaktelement 3 liegt auf einer dem Kugelkopf 1 abgewandten Seite an einer Halterung 4 an. Am Kontaktelement 3 ist ein Bolzen 5 angeordnet welcher einteilig mit dem Kontaktelement 3 ausgebildet ist. Alternativ können der Bolzen 5 und das Kontaktelement 3 zweiteilig ausgebildet und ortsfest verbunden sein, beispielsweise verschweißt. Der Kugelkopf 1, das Kontaktelement 3 sowie der Bolzen 5 sind in der hier beschriebenen Ausführungsform rotationssymmetrisch zu einer Achse 6 ausgebildet. Die Halterung 4 weist eine Aufnahmebohrung 7 auf, in der der Bolzen 5 eingesetzt wird. Um eine stabile Verbindung zwischen der Halterung 4 und dem Bolzen 5 zu gewährleisten, kann eine Presspassung für den Bolzen 5 und der Aufnahmebohrung 7 vorgesehen sein. Ein Verschweißen des Kontaktelements 3 mit der Halterung 4 ist ebenfalls möglich. Die Halterung 4 ist mit einem nicht dargestellten landwirtschaftlichen Fahrzeug, beispielsweise einem Traktor, verbunden.

An einer Kugeloberfläche 8 des Kugelkopfs 1 ist eine Kugelpfanne 9 drehbar gelagert, welche das Gegenstück zum Kugelkopf 1 der Anhängerkupplung 2 bildet. Die Kugelpfanne 9 ist einteilig mit einer Deichsel 10 ausgebildet, welche die Kugelpfanne 9 mit einem nicht dargestellten Anhänger oder einer landwirtschaftlichen Arbeitsmaschine verbindet.

Zusätzlich ist im Ausführungsbeispiel ein Verschluss 15 an der Halterung 4 befestigt, welcher die Kugelpfanne 9 vor einem Abheben vom Kugelkopf 1 in vertikaler Richtung sichert.

Zugkräfte werden vom Zugfahrzeug über die Anhängerkupplung 2 auf den Anhänger bzw. die landwirtschaftliche Arbeitsmaschine übertragen.

Hierbei verschleißt die Kugeloberfläche 8. Hauptverursacher für den Verschleiß der Kugeloberfläche 1 sind Reibkräfte, die infolge der Fahrdynamik zwischen Zugfahrzeug und Anhänger übertragen werden.

Ein vorderer Bereich 11, welcher bei einer Fahrt in Vorwärtsrichtung VR dem Zugfahrzeug zugewandt ist sowie ein dieser gegenüberliegender hinterer Bereich 12 der Kugeloberfläche 8, welcher sich bei der Fahrt in Vorwärtsrichtung VR auf einer dem Zugfahrzeug abgewandten Seite 12 der Kugeloberfläche 8 befindet, sind im besonderen Maße von Verschleißerscheinungen betroffen. Als Ursache hierfür ist zu nennen, dass in diesen Bereichen 11, 12 die durch Brems- und Beschleunigungsvorgänge entstehenden Zug- bzw. Druckkräfte im besonderen Maße übertragen werden.

Im Neuzustand weist der Kugelkopf 1 im landwirtschaftlichen Bereich häufig einen Durchmesser d1 von 80 mm auf. Der zulässige minimale Durchmesser d2 eines derartigen Kugelkopfs 1 beträgt in der Regel 79 mm. Erfindungsgemäß weist der Kugelkopf 1 eine Anzeige 22 für den Verschleiß des Kugelkopfs 1 auf, welche eine als Nut 13 ausgebildete Vertiefung 14 ist, die dem Bediener einen Verschleißzustand signalisiert.

In der gezeigten Ausführung ist eine als erste Nut 13 ausgebildete Vertiefung 14a an dem vorderen Bereich 11 und eine als zweite Nut 16 ausgebildete Vertiefung 14b diesen gegenüberliegend an dem hinteren Bereich 12 angeordnet. Beide Nuten 13, 16
sind derart ausgestaltet, dass sie in ihrer Tiefe 17 bis auf den minimal zulässigen Durchmesser d2 des Kugelkopfes 1 hineinragen. Sobald die Kugeloberfläche 8 bis zu der Tiefe 17 einer der Nuten 13, 16 verschlissen ist, hebt sich die jeweilige Nut 13, 16 nicht mehr von der Kugeloberfläche 8 ab, die jeweilige Nut 13, 16 ist somit nicht mehr für den Bediener ersichtlich und ein kritischer Verschleißzustand ist erreicht. Dies signalisiert dem Bediener, dass eine Überprüfung der Verwendbarkeit des Kugelkopfs 1 erforderlich ist. Sobald beide Nuten 13, 16 nicht mehr ersichtlich sind, wird hierdurch dem Bediener signalisiert, dass der Verschleißzustand den minimal zulässigen Durchmesser d2 erreicht oder bereits unterschritten hat. In diesem Fall wird dem Bediener signalisiert, dass ein Austausch des Kugelkopfes 1 erforderlich ist.

Weiterhin werden die Nuten 13, 16 mit einem ersten Material (nicht gezeigt), beispielsweise ein gehärteter Kunststoff, befüllt, sodass eine ebene Kugeloberfläche 8 entsteht. Scharfe Kanten, die bei einer Drehbewegung der Kugelpfanne 9 relativ zum Kugelkopf 1 zusätzlichen Verschleiß verursachen, werden hierdurch vermieden. Hierfür weist das erste Material eine mit einem für den Kugelkopf 1 verwendeten zweiten Material 23, bei dem es sich in der Regel um Stahl handelt, vergleichbare Verschleißfestigkeit auf. Das erste Material unterscheidet sich in seiner Farbe von dem zweiten Material 23, sodass sich dieses optisch von der Kugeloberfläche 8 abhebt und dem Bediener hierdurch ersichtlich ist, sobald ein Abrieb der Kugeloberfläche 8 bis zu einem Durchmesser d1 oder d2 vorgedrungen ist, bis zu welchem die Nut 13, 16 in ihrer Tiefe 17 in den Kugelkopf 1 hineinragt.

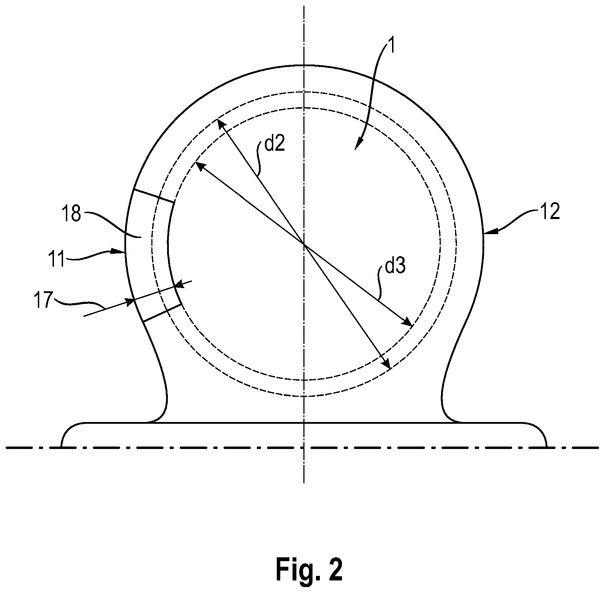

In einer alternativen Ausführung gemäß Figur 2 ist eine dritte Nut 18 derart ausgestaltet, dass diese in ihrer Tiefe 17 bis auf einen Durchmesser d3 des Kugelkopfs 1 hineinragt. Dieser Durchmesser D3 ist kleiner als der minimal zulässige Durchmesser d2. Die Positionierung der dritten Nut 18 berücksichtigt unterschiedlich stark über die Oberfläche des Kugelkopfs verteilte Verschleißerscheinungen. In dieser alternativen Ausführungsform ist die dritte Nut 18 im vorderen Bereich 11 des Kugelkopfs 1 angeordnet, welcher bei einer Fahrt in Vorwärtsrichtung VR dem Zugfahrzeug zugewandt ist. Dieser vordere Bereich 11 ist besonders stark von Verschleißerscheinungen betroffen und weist in dieser alternativen Ausführung einen ausgeprägteren Abrieb als ein dieser gegenüberliegender hinterer Bereich 12 des Kugelkopfs 1 auf, wobei der vordere und hintere Bereich 11, 12 einen gemeinsamen Durchmesser (nicht gezeigt) des Kugelkopfs 1 aufweisen. Der dritte Durchmesser d3, bis zu dem die dritte Nut 18 in den Kugelkopf 1 hineinragt, ist derart gewählt, sodass sobald der Abrieb des Kugelkopf 1 im vorderen Bereich 11 bis zu dem dritten Durchmesser d3 vorgedrungen ist, der gemeinsame Durchmesser des vorderen und hinteren Bereichs 11, 12 der Länge des minimal zulässigen Durchmessers d2 entspricht. Somit ist für den Bediener leicht erkenntlich, sobald der minimal zulässige Verschleißzustand erreicht ist. Die Position der dritten Nut 18 sowie die Ausmaße des dritten Durchmessers d3 können beispielsweise mittels iterativer Versuche ermittelt werden.

**Bezugszeichenliste:**

| | | | |
|---|---|---|---|
| 1 | Kugelkopf | VR | Vorwärtsrichtung |
| 2 | Anhängerkupplung | d1 | Maximaler Durchmesser |
| 3 | Kontaktelement | d2 | Minimaler zulässiger Durchmesser |
| 4 | Halterung | d3 | Dritter Durchmesser |
| 5 | Bolzen | | |
| 6 | Achse | | |
| 7 | Aufnahmebohrung | | |
| 8 | Kugeloberfläche | | |
| 9 | Kugelpfanne | | |
| 10 | Deichsel | | |
| 11 | Vorderer Bereich | | |
| 12 | Hinterer Bereich | | |
| 13 | Erste Nut | | |
| 14 | Vertiefung | | |
| 14a | Vertiefung | | |
| 14b | Vertiefung | | |
| 15 | Verschluss | | |
| 16 | Zweite Nut | | |
| 17 | Tiefe | | |
| 18 | Dritte Nut | | |
| 22 | Anzeige | | |
| 23 | Zweites Material | | |

## Patentansprüche

1. Kugelkopf (1) einer Anhängerkupplung (2) eines landwirtschaftlichen Fahrzeugs umfassend
eine Anzeige (22) für den Kugelkopfverschleiß, die einteilig mit dem Kugelkopf (1) ausgebildet ist,
**dadurch gekennzeichnet, dass**
die Anzeige (22) als zumindest eine Vertiefung (14) an einer Kugeloberfläche (8) des Kugelkopfs (1) ausgebildet ist.

2. Kugelkopf (1) einer Anhängerkupplung (2) nach Anspruch 1, **dadurch gekennzeichnet, dass** die Vertiefung (14) im Wesentlichen als Nut (13, 16, 18, 19) an der Kugeloberfläche (8) des Kugelkopfs (1) ausgebildet ist.

3. Kugelkopf (1) einer Anhängerkupplung (2) nach Anspruch 1 oder 2, **dadurch gekennzeichnet, dass** der Kugelkopf (1) einen maximalen Durchmesser (d1) und einen minimalen Durchmesser (d2) aufweist, wobei der maximale Durchmesser (d1) dem Ausgangsdurchemesser des Kugelkopfs (1) im Neuzustand entspricht und der minimale Durchmesser (d2) der minimal für den Gebrauch zulässige Durchmesser (d2) ist.

4. Kugelkopf (1) einer Anhängerkupplung (2) nach einem der Ansprüche 1 bis 3, **dadurch gekennzeichnet, dass** zumindest eine Vertiefung (14a) von der Kugeloberfläche (8) bis zu dem minimalen Durchmesser (d2) in den Kugelkopf (1) hineinreicht, wobei die Vertiefung (14) einen maximal zulässigen Verschleißzustand signalisiert.

5. Kugelkopf (1) einer Anhängerkupplung (2) nach einem der Ansprüche 1 bis 3, **dadurch gekennzeichnet, dass** zumindest eine Vertiefung (14b) von der Kugeloberfläche (8) bis zu einem dritten Durchmesser (d3) in den Kugelkopf (1) hineinreicht, wobei der dritte Durchmesser (d3) einen definierten Verschleißzustand signalisiert.

6. Kugelkopf (1) einer Anhängerkupplung (2) nach einem der Ansprüche 1 bis 5, **dadurch gekennzeichnet, dass** die Vertiefung (14, 14a, 14b) zumindest teilweise mit einem ersten Material befüllt ist, wobei das erste Material sich in seiner Farbe und/oder Struktur von der übrigen Kugeloberfläche (8) unterscheidet.

7. Kugelkopf (1) einer Anhängerkupplung (2) nach Anspruch 6, **dadurch gekennzeichnet, dass** die Verschleißfestigkeit des ersten Materials im Wesentlichen äquivalent zu einem zweiten Material (23) ist, wobei der Kugelkopf (1) aus dem zweiten Material (23) ausgebildet ist.

8. Kugelkopf (1) einer Anhängerkupplung (2) nach einem der Ansprüche 1 bis 7, **dadurch gekennzeichnet, dass** zumindest eine Vertiefung (14, 14a, 14b) an einen dem Zugfahrzeug zugewandten vorderen Bereich (11) der Kugeloberfläche (8) angeordnet ist.

9. Kugelkopf (1) einer Anhängerkupplung (2) nach einem der Ansprüche 1 bis 8, **dadurch gekennzeichnet, dass** zumindest eine Vertiefung (14, 14a, 14b) an einen dem Zugfahrzeug abgewandten hinteren Bereich (12) der Kugeloberfläche (8) angeordnet ist.

## Claims

1. A ball head (1) of a trailer coupling (2) for an agricultural vehicle, comprising
an indicator (22) for the wear of the ball head, which is formed as a single piece with the ball head (1),
**characterized in that**
the indicator (22) is formed as at least one depression (14) on a ball surface (8) of the ball head (1).

2. The ball head (1) of a trailer coupling (2) according to claim 1, **characterized in that** the depression (14) is substantially formed as a groove (13, 16, 18, 19) on the ball surface (8) of the ball head (1).

3. The ball head (1) of a trailer coupling (2) according to claim 1 or claim 2, **characterized in that** the ball head (1) has a maximum diameter (d1) and a minimum diameter (d2), wherein the maximum diameter (d1) corresponds to the initial diameter of the ball head (1) in the new condition and the minimum diameter (d2) is the diameter (d2) which is the minimum that is permissible for use.

4. The ball head (1) of a trailer coupling (2) according to one of claims 1 to 3, **characterized in that** at least one depression (14a) extends inwards into the ball head (1) from the ball surface (8) to the minimum diameter (d2), wherein the depression (14) indicates a maximum permissible state of wear.

5. The ball head (1) of a trailer coupling (2) according to one of claims 1 to 3, **characterized in that** the at least one depression (14b) extends inwards into the ball head (1) from the ball surface (8) to a third diameter (d3), wherein the third diameter (d3) indicates a defined state of wear.

6. The ball head (1) of a trailer coupling (2) according to one of claims 1 to 5, **characterized in that** the depression (14, 14a, 14b) is at least partially filled with a first material, wherein the first material differs from the remaining ball surface (8) in its colour and/or structure.

7. The ball head (1) of a trailer coupling (2) according to claim 6, **characterized in that** the wear resistance of the first material is substantially equivalent to that of a second material (23), wherein the ball head (1) is formed from the second material (23).

8. The ball head (1) of a trailer coupling (2) according to one of claims 1 to 7, **characterized in that** at least one depression (14, 14a, 14b) is disposed on a front region (11) of the ball surface (8) which faces the traction vehicle.

9. The ball head (1) of a trailer coupling (2) according to one of claims 1 to 8, **characterized in that** at least one depression (14, 14a, 14b) is disposed on a rear region (12) of the ball surface (8) which faces away from the traction vehicle.

## Revendications

1. Tête à rotule (1) d'un attelage de remorque (2) d'un véhicule agricole, incluant
un indicateur (22) pour l'usure de tête à rotule, lequel est conçu d'un seul tenant avec la tête à rotule (1),
**caractérisée en ce que**
l'indicateur (22) est conformé en au moins un renfoncement (14) sur une surface de rotule (8) de la tête à rotule (1).

2. Tête à rotule (1) d'un attelage de remorque (2) selon la revendication 1, **caractérisée en ce que** le renfoncement (14) est conformé sensiblement en rainure (13, 16, 18, 19) sur la surface de rotule (8) de la tête à rotule (1).

3. Tête à rotule (1) d'un attelage de remorque (2) selon la revendication 1 ou 2, **caractérisée en ce que** la tête à rotule (1) présente un diamètre maximal (d1) et un diamètre minimal (d2), le diamètre maximal (d1) correspondant au diamètre initial de la tête à rotule (1) à l'état neuf et le diamètre minimal (d2) étant le diamètre (d2) minimal admissible pour l'utilisation.

4. Tête à rotule (1) d'un attelage de remorque (2) selon une des revendications 1 à 3, **caractérisée en ce que** le au moins un renfoncement (14a) s'étend dans la tête à rotule (1) depuis la surface de rotule (8) jusqu'au diamètre minimal (d2), le renfoncement (14) signalant un état d'usure maximal admissible.

5. Tête à rotule (1) d'un attelage de remorque (2) selon une des revendications 1 à 3, **caractérisée en ce qu'**au moins un renfoncement (14b) s'étend dans la tête à rotule (1) depuis la surface de rotule (8) jusqu'à un troisième diamètre (d3), le troisième diamètre (d3) signalant un état d'usure défini.

6. Tête à rotule (1) d'un attelage de remorque (2) selon une des revendications 1 à 5, **caractérisée en ce que** le renfoncement (14, 14a, 14b) est empli au moins en partie avec un premier matériau, le premier matériau se distinguant par sa couleur et/ou structure de la surface de rotule (8) restante.

7. Tête à rotule (1) d'un attelage de remorque (2) selon la revendication 6, **caractérisée en ce que** la résistance à l'usure du premier matériau est sensiblement équivalente à un second matériau (23), la tête à rotule (1) étant constituée du second matériau (23).

8. Tête à rotule (1) d'un attelage de remorque (2) selon une des revendications 1 à 7, **caractérisée en ce qu'**au moins un renfoncement (14, 14a, 14b) est disposé sur une zone avant (11), tournée vers le véhicule de traction, de la surface de rotule (8) .

9. Tête à rotule (1) d'un attelage de remorque (2) selon une des revendications 1 à 8, **caractérisée en ce qu'**au moins un renfoncement (14, 14a, 14b) est disposé sur une zone arrière (12), située à l'opposé du véhicule de traction, de la surface de rotule (8).
